# EUROPÄISCHE PATENTSCHRIFT

(11) **EP 2 169 423 B1**
(45) Veröffentlichungstag und Bekanntmachung des Hinweises auf die Patenterteilung: **23.03.2016**
(21) Anmeldenummer: 09166703.0
(22) Anmeldetag: 29.07.2009
(51) Int. Cl.: G01S 7/03, G01S 7/35, H01P 1/04

(54) **Radarsensor mit abgeschirmtem Signalstabilisator**
Radar sensor with shielded signal stabiliser
Capteur de radar doté d'un stabilisateur de signal blindé

(30) Priorität: 29.09.2008 DE 102008042449
(43) Veröffentlichungstag der Anmeldung: 31.03.2010
(73) Patentinhaber: Robert Bosch GmbH, 70442 Stuttgart (DE)
(72) Erfinder: Klar, Michael, 71106 Magstadt (DE); Binzer, Thomas, 70565 Stuttgart (DE); Miosga, Klaus-Dieter, 71522 Backnang (DE); Brueggemann, Oliver, 75248 Oelbronn-Duerrn (DE); Hauk, Joachim, 71272 Renningen-Malmsheim (DE); Steinbuch, Dirk, 71299 Wimsheim (DE); Seiz, Juergen, 73642 Welzheim (DE)

(56) Entgegenhaltungen:
- EP-A- 1 363 351
- EP-A- 1 793 489
- US-A1- 2006 132 350
- US-B1- 6 420 778
- CAMIADE M ET AL: "Fully MMIC-Based Front End for FMCW Automotive Radar at 77GHz" EUROPEAN MICROWAVE CONFERENCE, 2000. 30TH, IEEE, PISCATAWAY, NJ, USA, 1. Oktober 2000 (2000-10-01), Seiten 1-4, XP031067362

## Beschreibung

### Stand der Technik

Die Erfindung betrifft einen Radarsensor mit einer Senderbaugruppe und einem Signalstabilisator, die auf einer gemeinsamen Leiterplatte angeordnet sind, einem den Signalstabilisator aufnehmenden Gehäuse, das zusammen mit einer leitenden Schicht der Leiterplatte eine Abschirmung gegen Hochfrequenzstrahlung des Signalstabilisators bildet, und mit einer die Abschirmung durchquerenden Anbindungsleitung zur Verbindung des Signalstabilisators mit der Senderbaugruppe.

Solche Radarsensoren werden beispielsweise als Abstandssensoren in Kraftfahrzeugen eingesetzt und arbeiten typischerweise mit einer Frequenz von 77 GHz. Um die Hochfrequenz bei 77 GHz zu erzeugen bzw. in auswertbare Signale umzuwandeln, werden seit einiger Zeit sogenannte MMICs (Microwave Monolithic Integrated Circuit) als Senderbaugruppe verwendet.

Zur Signalstabilisierung werden häufig Regelschleifen mit Referenzoszillatoren hoher Güte eingesetzt. Diese Referenzoszillatoren dienen dazu, das eigentliche Radarsignal in einen geeigneten Regelfrequenzbereich für eine Phasenregelschleife (PLL, Phase Locked Loop) umzusetzen, und arbeiten üblicherweise selbst mit Frequenzen (z.B. ca. 18 GHz), die aufgrund der einschlägigen Normen und Vorschriften nicht bzw. nur mit sehr geringen Pegeln ausgesendet werden dürfen. Aus diesem Grund werden die betroffenen Schaltungsteile mit Abschirmungsgehäusen versehen.

Andererseits muß jedoch der Signalstabilisator an die Senderbaugruppe angebunden sein, damit der auf deren Signal einwirken kann.

Bekannt ist eine Anbindung der geschirmten Schaltungsteile über auf der Leiterplatte verlegte Hochfrequenzleitungen, für die entsprechende Öffnungen im Abschirmgehäuse notwendig sind. Um eine Abstrahlung der abzuschirmenden Frequenzanteile über diese Öffnungen zu unterdrücken, werden Gehäusekanäle genutzt, die als Hohlleiter-Filterstrukturen fungieren.

US 2006/132350 A1 und CAMIADE M ET AL: "Fully MMIC Based Front End for FMCW Automotive Radar at 77GHz" EUROPEAN MICROWAVE CONFERENCE, 2000. 30TH, IEEE, PISCATAWAY, NJ, USA, 1. Oktober 2000 (2000-10-01), Seiten 1-4, XPO31 067362 offenbaren Radarsensoren mit einer Senderbaugruppe und einem Signalstabilisator, die auf einer gemeinsamen Leiterplatte angeordnet sind.

EP-A-1 793 489 offenbart eine Abschirmung eines Oszillators und schlägt vor, ein Gehäuse vorzusehen, das den Oszillator aufnimmt und zusammen mit einer leitenden Schicht der Leiterplatte eine Abschirmung gegen Hochfrequenzstrahlung des Oszillators bildet, wobei eine Anbindungsleitung zur Verbindung des Oszillators mit einer Senderbaugruppe die Abschirmung durchquert und isoliert in die Leiterplatte eingebettet ist.

EP-A-1 363 351 offenbart eine Anbindungsleitung, die als Mikrostreifenleitung in der Leiterplatte ausgebildet ist und durch ein Fenster in der Wand des Gehäuses verläuft.

US-B1-6 420 778 offenbart die Verwendung einer differentiellen Anbindungsleitung.

### Offenbarung der Erfindung

Aufgabe der Erfindung ist es, einen Radarsensor zu schaffen, der bei geringem Platzbedarf eine wirksame Abschirmung der Strahlung des Signalstabilisators ermöglicht.

Diese Aufgabe wird erfindungsgemäß dadurch gelöst, daß die Leiterplatte eine isolierende Schicht aufweist, daß die leitende Schicht auf der von dem Gehäuse abgewandten Seite der isolierenden Schicht liegt und über Durchkontaktierungen elektrisch mit dem Gehäuse verbunden ist, und daß die Anbindungsleitung isoliert in die Leiterplatte eingebettet ist und daß ihre Leiterbahnen durch Teile der leitenden Schicht gebildet werden, die durch eine Aussparung von den übrigen Teilen dieser Schicht getrennt sind.

Die Anbindungsleitung verläuft somit an der Stelle, an der sie die Wand des Abschirmgehäuses durchquert, nicht auf der Oberfläche der Leiterplatte, sondern ist dort im Inneren der Leiterplatte "vergraben", so daß kein Kurzschluß mit der Abschirmung entsteht. Das Abschirmgehäuse wird somit nur durch die Dicke der isolierenden Schicht oder Schichten der Leiterplatte unterbrochen und ist im übrigen vollständig geschlossen, und es brauchen keine zusätzlichen Öffnungen für die Anbindungsleitung in der Wand des Gehäuses gebildet zu werden. Hierdurch wird eine gute Abschirmung erreicht und zugleich der Platz für die bisher benötigten Hohlleiter-Filterstrukturen eingespart. Dementsprechend wird auch ein sehr einfacher Aufbau des Gehäuses erreicht.

Vorteilhafte Ausgestaltungen und Weiterbildungen der Erfindung sind in den Unteransprüchen angegeben.

Die Anbindungsleitung kann als differentielle Anbindungsleitung ausgeführt und durch eine elektrisch leitende Schicht der Leiterplatte gebildet werden, die wahlweise zugleich die Masseschicht der Leiterplatte bildet. Die leitende Verbindung zwischen der Anbindungsleitung und den auf der Oberfläche der Leiterplatte verlaufenden Leitungsstrukturen kann dann z.B. mit Hilfe von Durchkontaktierungen, sogenannten VIAs (Vertical Interconnect Access) gebildet werden.

In einer anderen Ausführungsform wird die Verbindung statt mittels VIAs mit Hilfe von Feldkopplung, z.B. Schlitzkopplung, hergestellt.

Die Anbindungsleitung kann wahlweise auch eine Mikrostreifenleitung sein.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: einen schematischen Grundriß wesentlicher Teile eines erfindungsgemäßen Radarsensors; und
- Fig. 2: eine perspektivische Darstellung einer Anbindungsleitung in dem Radarsensor nach Fig. 1.

### Ausführungsformen der Erfindung

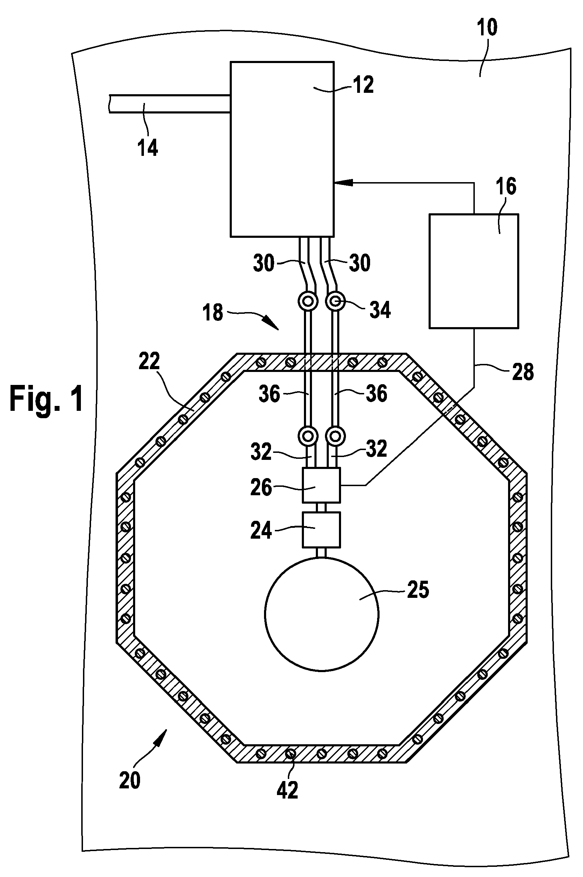

In Fig. 1 ist ein Teil einer Leiterplatte 10 dargestellt, auf der die wesentlichen Komponenten eines Radarsensors angeordnet sind. Eine Senderbaugruppe 12 des Radarsensors wird durch ein MMIC gebildet. Eine Hochfrequenzleitung 14 führt von der Senderbaugruppe 12 zu einer nicht gezeigten Antenne, über die das Radarsignal abgestrahlt und ggf. - bei einem monostatischen Antennenkonzept - auch das reflektierte Signal wieder empfangen wird.

Das über die Hochfrequenzleitung 14 ausgegebene Signal hat beispielsweise eine Frequenz von 77 GHz. Diese Frequenz sowie die Phase des ausgegebenen Signals werden stabilisiert mit Hilfe einer Phasenregelschleife (PLL; Phase Locked Loop) 16. Da die PLL jedoch nicht mit der hohen Frequenz von 77 GHz arbeiten kann, wird in der Senderbaugruppe 12 durch Frequenzteilung des gesendeten Signals ein Hochfrequenzsignal erzeugt, dessen Frequenz einen bestimmten Bruchteil der Frequenz des gesendeten Signals beträgt, beispielsweise etwa 19 GHz. Dieses Signal wird über eine Anbindungsleitung 18 an einen Signalstabilisator 20 ausgegeben, der in ein abschirmendes Gehäuse 22 gekapselt ist.

Der Signalstabilisator 20 enthält einen Oszillator 24 mit einem Resonator 25 von sehr hoher Güte, der ein Referenzsignal mit einer Frequenz von beispielsweise 18 GHz erzeugt, und einen Mischer 26, der das Referenzsignal mit dem über die Anbindungsleitung 18 empfangenen 19 GHz-Signal der Senderbaugruppe 12 mischt. Das Mischprodukt, das eine deutlich geringere Frequenz hat, wird über eine Leitung 28 der PLL 16 zugeführt, die anhand dieses Signals etwaige Frequenzabweichungen des Sendesignals auf der Hochfrequenzleitung 14 erkennt und die Senderbaugruppe 12 in einem geschlossenen Regelkreis so regelt, daß die Frequenzabweichung beseitigt wird.

Nach den nationalen Vorschriften verschiedener Länder und nach einigen internationalen Normen (z.B. ETSI) sind die zulässigen Emissionen von Hochfrequenzsignalen im Frequenzbereich um 18 GHz begrenzt, d.h., es dürfen in diesem Frequenzbereich nur sehr geringe Sendeleistungen emittiert werden.

Das von der Senderbaugruppe 12 über die differentielle Anbindungsleitung 18 ausgegebene Signal läßt sich so schwach halten, daß hier die zulässigen Emissionen nicht überschritten werden. Das Signal des Oszillators 24 mit dem Resonator 25 darf sich jedoch nicht zu stark von dem 18 GHz-Signal der Senderbaugruppe unterscheiden und muß aufgrund der erforderlichen Güte des Oszillators eine relativ hohe Amplitude haben, so daß dieser Oszillator eine verhältnismäßig starke Emissionsquelle darstellt. Aus diesem Grund sind der Oszillator 24, der Resonator 25 und der mit dem Oszillator verbundene Mischer 26 in dem abschirmenden, elektrisch leitenden Gehäuse 22 untergebracht.

Die differentielle Anbindungsleitung 18 wird im gezeigten Beispiel sowohl auf der Seite der Senderbaugruppe 12 als auch auf der Seite des Mischers 26 durch zwei parallele Leiterbahnen 30 bzw. 32 gebildet, die auf der Oberfläche der Leiterplatte 10 verlaufen. Jede dieser Leiterbahnen 30, 32 ist über eine Durchkontaktierung (VIA) 34 mit einer Leiterbahn 36 verbunden, die in das isolierende Material der Leiterplatte 10 eingebettet oder "vergraben" ist und somit innerhalb der Leiterplatte 10 die Wand des Gehäuses 22 unterquert und dabei elektrisch von diesem Gehäuse isoliert bleibt.

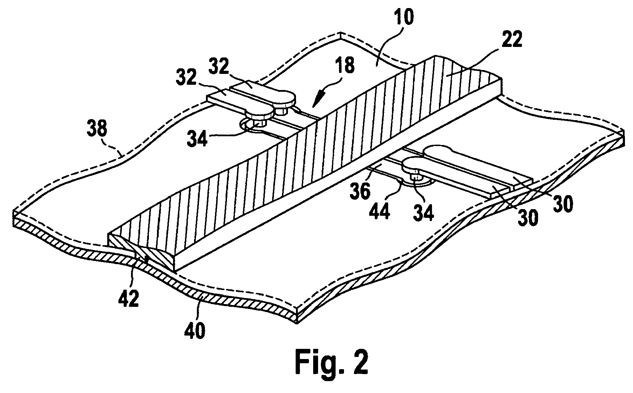

Wie Fig. 2 zeigt, hat die Leiterplatte 10 im gezeigten Beispiel einen zweischichtigen Aufbau, mit einer isolierenden oberen Schicht 38, die in Fig. 2 aus Gründen der Deutlichkeit transparent gestellt ist, und einer durchgehenden elektrisch leitenden Schicht 40.

Die Schicht 40 dient hier als Masse des Radarsensors. Die Wand des Gehäuses 22, von der in Fig. 2 nur ein relativ flacher unterer Randbereich dargestellt ist, sitzt unmittelbar auf der isolierenden Schicht 38 auf, ist jedoch über engmaschige Durchkontaktierungen 42 elektrisch mit der leitenden Schicht 40 verbunden, so daß der innerhalb des Gehäuses 22 gelegene Teil dieser Schicht 40 zusammen mit dem Gehäuse 22 eine praktisch vollständig geschlossene Abschirmung für den Signalstabilisator 20 bildet.

Die in die Leiterplatte 10 eingebetteten Leiterbahnen 36 der Anbindungsleitung 18 werden durch Teile der leitenden Schicht 40 gebildet, die durch eine Aussparung 44 von den übrigen Teilen dieser Schicht, der Masseschicht, getrennt sind. Über diese Leiterbahnen 36 kann somit das schwache 18 GHz-Signal der Senderbaugruppe durch das Innere der Leiterplatte 10 hindurch an den Mischer 26 übermittelt werden, ohne daß irgendwelche zusätzlichen Öffnungen in der Wand des Gehäuses 22 gebildet werden müssen, die dann durch aufwendige Filterstrukturen gegen Leckstrahlung gesichert werden müßten.

## Patentansprüche

1. Radarsensor mit einer Senderbaugruppe (12) und einem Signalstabilisator (20), die auf einer gemeinsamen Leiterplatte (10) angeordnet sind, einem den Signalstabilisator (20) aufnehmenden Gehäuse (22), das zusammen mit einer leitenden Schicht (40) der Leiterplatte (10) eine Abschirmung gegen Hochfrequenzstrahlung des Signalstabilisators (20) bildet, und mit einer die Abschirmung durchquerenden Anbindungsleitung (18) zur Verbindung des Signalstabilisators mit der Senderbaugruppe (12), **dadurch gekennzeichnet, daß** die Leiterplatte (10) eine isolierende Schicht (38) aufweist, daß die leitende Schicht (40) auf der von dem Gehäuse (22) abgewandten Seite der isolierenden Schicht (38) liegt und über Durchkontaktierungen (42) elektrisch mit dem Gehäuse (22) verbunden ist, und daß die Anbindungsleitung (18) isoliert in die Leiterplatte (10) eingebettet ist und daß ihre Leiterbahnen (36) durch Teile der leitenden Schicht (40) gebildet werden, die durch eine Aussparung (44) von den übrigen Teilen dieser Schicht getrennt sind.

2. Radarsensor nach Anspruch 1, bei dem die Leiterbahnen (36) über Durchkontaktierungen (34) galvanisch mit angrenzenden, auf der Leiterplatte (10) verlaufenden Leiterbahnen (30, 32) verbunden sind.

## Claims

1. Radar sensor comprising a transmitter module (12) and a signal stabilizer (20), which are arranged on a shared circuit board (10), a housing (22), which accommodates the signal stabilizer (20) and together with a conducting layer (40) of the circuit board (10) forms a shield against high frequency radiation of the signal stabilizer, and comprising a connection line (18), which crosses through the shield and is intended for connecting the signal stabilizer to the transmitter module (12), **characterized in that** the circuit board (10) has an insulating layer (38), **in that** the conducting layer (40) is on the side of the insulating layer (38) that is facing away from the housing (22) and is electrically connected to the housing (22) by way of feedthroughs (42), and **in that** the connection line (18) is embedded in the circuit board (10) in an insulated manner and **in that** its strip conductors (36) are formed by parts of the conducting layer (40) that are separated from the other parts of this layer by a clearance (44).

2. Radar sensor according to Claim 1, in which the strip conductors (36) are galvanically connected by way of feedthroughs (34) to adjacent strip conductors (30, 32) running on the circuit board (10).

## Revendications

1. Capteur de radar doté d'un module émetteur (12) et d'un stabilisateur de signal (20), lesquels sont disposés sur une carte à circuits imprimés commune (10), un boîtier (22) recevant le stabilisateur de signal (20), qui, conjointement avec une couche conductrice (40) de la carte à circuits imprimés (10), forme un blindage contre les rayonnements haute fréquence du stabilisateur de signal (20), et doté d'une conduite de liaison (18) traversant le blindage, pour la liaison du stabilisateur de signal au module émetteur (12), **caractérisé en ce que** la carte à circuits imprimés (10) présente une couche d'isolation (38), **en ce que** la couche conductrice (40) est située du côté de la couche d'isolation (38) opposé au boîtier (22) et est connectée électriquement au boîtier (22) par le biais de trous métallisés (42), et **en ce que** la conduite de liaison (18) est noyée de manière isolée dans la carte à circuits imprimés (10) et **en ce que** ses pistes conductrices (36) sont formées par des parties de la couche conductrice (40) qui sont séparées par un évidement (44) des autres parties de cette couche.

2. Capteur de radar selon la revendication 1, dans lequel les pistes conductrices (36) sont connectées par voie galvanique, par le biais de trous métallisés (34), à des pistes conductrices adjacentes (30, 32) s'étendant sur la carte à circuits imprimés (10).
